# EUROPEAN PATENT APPLICATION

(11) **EP 2 698 838 A1**
(43) Date of publication of application: **19.02.2014**
(21) Application number: 13171110.3
(22) Date of filing: 07.06.2013
(51) Int. Cl.: H01M 2/04, H01M 2/22

(54) **Protection apparatus for battery pack and battery pack having the same**

(30) Priority: 16.08.2012 US 201261684034 P; 15.03.2013 US 201313838179
(71) Applicant: Samsung SDI Co., Ltd., Yongin-si, Gyeonggi-do (KR)
(72) Inventor: BYUN, Bo-Hyun, Gyeonggi-do (KR)
(74) Representative: Mounteney, Simon James

(57) **Abstract**

There is provided a battery pack having a protection apparatus. The protection apparatus includes a body portion, a first connecting portion, a second connecting portion and an extending portion. The first connecting portion is positioned on one surface of the body portion so as to come in surface contact with a first terminal of the battery pack, and the first terminal and the body portion are electrically connected by the first connecting portion. The second connecting portion is positioned on the other surface of the body portion. The extending portion is bent and extended from the second connecting portion, and the second connection portion and a second terminal of the battery pack are electrically connected by the extending portion.

## Description

### BACKGROUND

### Field

The present invention relates to a battery pack having a protection apparatus.

### Description of the Related Art

Recently, battery packs have been variously used as power sources of portable electronic devices. As the portable electronic devices are used in various fields, demands on battery packs are rapidly increased. The battery packs can be charged/discharged a plurality of times, and accordingly are economically and environmentally efficient. Thus, the use of the battery packs is encouraged.

As the small size and light weight of electronic devices are required, the small size and light weight of battery packs are also required. However, since a material such as lithium having high reactivity is provided to the inside of the battery pack, the small size and light weight of the battery pack is limited due to the safety of the battery pack. Accordingly, a variety of studies have been conducted to develop a battery pack that can implement as a small and light battery pack while improving the safety of the battery pack.

Meanwhile, the battery pack further includes various apparatuses such as a protection apparatus for the purpose of its safety.

### SUMMARY

The present invention provides a battery pack having a protection apparatus for , which can achieve a small size and a light weight and improved safety.

According to the present invention, there is provided a battery pack according to claim 1. Preferred aspects of the present invention are defined in claims 2 to 12.

As described above, according to the present invention, the first connecting portion of the protection apparatus is connected to the first terminal, and the second connecting portion is connected to the second terminal through the extending portion, so that it is possible to implement the small size and light weight of the battery pack and to improve the safety of the battery pack.

Further, the first connecting portion of the protection apparatus comes in surface contact with the first terminal, so that it is possible to improve the connection between the protection apparatus and the battery pack. Furthermore, the body portion more precisely measures a temperature of the battery pack, thereby improving the safety of the battery pack.

These and other features and advantages of the present invention will be set forth or will become more fully apparent in the description that follows.

Prior to the foregoing, terms and words used in this specification or claims shall not be interpreted as typical or dictionary meanings, but shall be interpreted as meanings and concepts complying with the technical spirit of the present invention in accordance with the principle that the inventor may properly define the concept of the terms to explain his/her invention by the best method.

### BRIEF DESCRIPTION OF THE DRAWINGS

The accompanying drawings, together with the specification, illustrate exemplary embodiments of the present invention, and, together with the description, serve to explain the principles of the present invention.

FIG. 1 is a perspective view of a protection apparatus for a battery pack according to an embodiment of the present invention.

FIG. 2 is a sectional view of the protection apparatus shown in FIG. 1.

FIG. 3 is a sectional view showing a state in which the protection apparatus shown in FIG. 1 is mounted on a protection circuit module of the battery pack.

FIGS. 4 and 5 are perspective views of a protection apparatus for a battery pack according to another embodiment of the present invention.

FIG. 6 is a perspective view of a battery pack having a protection apparatus according to an embodiment of the present invention.

FIG. 7 is an exploded perspective view of the battery pack having the protection apparatus shown in FIG. 6.

FIG. 8 is a sectional view of the battery pack having the protection apparatus shown in FIG. 6.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

Hereinafter, embodiments of the present invention will be described in detail with reference to the accompanying drawings.

Protection Apparatus for Battery Pack

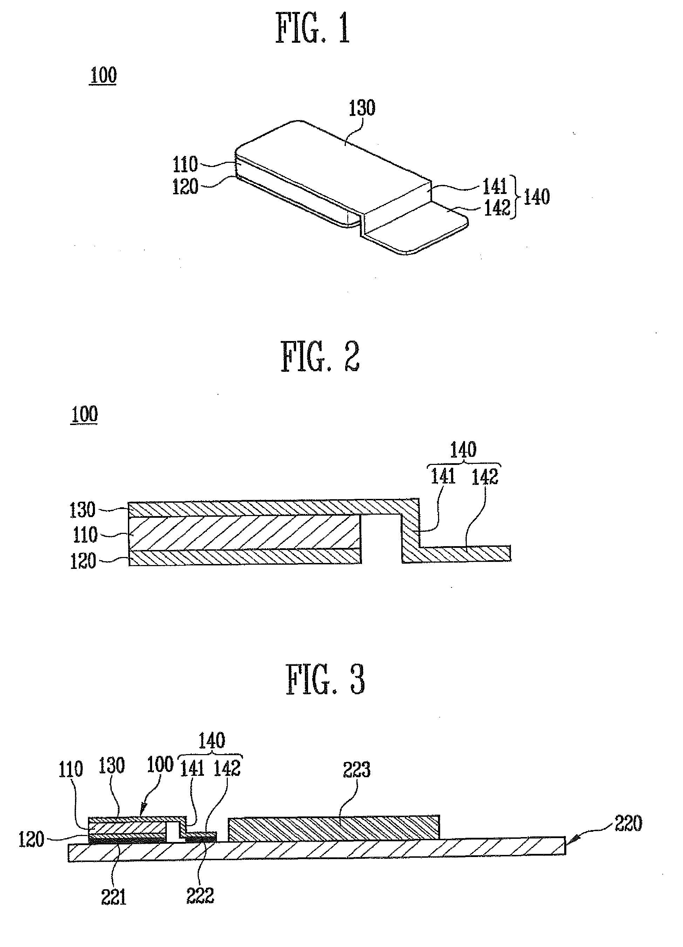

FIG. 1 is a perspective view of a protection apparatus 100 for a battery pack according to an embodiment of the present invention. FIG. 2 is a sectional view of the protection apparatus 100 shown in FIG. 1. Hereinafter, the protection apparatus 100 according to this embodiment will be described with reference to FIGS. 1 and 2.

As shown in FIGS. 1 and 2, the apparatus 100 according to this embodiment includes a body portion 110, a first connecting portion 120 positioned on one surface of the body portion 110, a second connecting portion 130 positioned on the other surface of the body portion 110, and an extending portion 140 bent and extended from the second connecting portion 130.

The body portion 110 is a member of which resistance is changed depending on temperature, and forms the basis of the protection apparatus 100.

Here, the body portion 110 is an element of which resistance is changed together with a temperature changed by measuring the temperature of the battery pack. The body portion 110 may include, for example, a positive temperature coefficient (PTC) element. For example, if the temperature of the battery pack is increased, the resistance of the body portion 110 increases together with the temperature. If heat is excessively generated from the battery pack, the body portion 110 cuts off current flowing through the first and second connecting portions 120 and 130.

Meanwhile, the body portion 110 may be implemented to measure the temperature of a bare cell in the battery pack.

FIG. 3 is a sectional view showing a state in which the protection apparatus 100 shown in FIG. 1 is mounted on a protection circuit module 200 of the battery pack. Hereinafter, the first connecting portion 120, the second connecting portion 130 and the extending portion 140 in the protection apparatus 100 will be described in detail with reference to FIG. 3.

The first connecting portion 120 is a member positioned on the one surface of the body portion 110, and comes in surface contact with a first terminal 221 of the battery pack. A bottom surface of the first connecting portion 120 contacts a parallel surface of the first terminal 221. Preferably, more than 30% of the bottom surface of the first connecting portion 120 contacts the parallel surface of the first terminal 221. In the embodiment of Figure 3, the entire bottom surface of the first connecting portion 120 contacts the parallel surface of the first terminal 221.

Here, the first connecting portion 120 is formed to have a width equal to or narrower than that of the body portion 110, and does not protrude beyond the edges of the body portion 110. Therefore, in a case where the protection apparatus 100 is viewed in the direction in which the second connecting portion 130 is positioned, the first connecting portion 120 cannot be seen.

The first connecting portion 120 is electrically connected to the first terminal 221 formed on the protection circuit module 220. In this case, the first connecting portion 120 comes in surface contact with the first terminal 221. That is, the first connecting portion 120 is implemented in the shape of a flat plate. One surface of the first connecting portion 120 is connected to the body portion 110, and the other surface of the first connecting portion 120 contactsthe first terminal 221. Thus, the first connecting portion 120 allows the first terminal 221 and the body portion 110 to be electrically connected therethrough. To this end, the first connecting portion 120 may be made of, for example, an electrical conductive metal such as gold, silver, copper or nickel.

In this case, 30% or more of the first connecting portion 120 preferably comes in contact with the first terminal 221. In a case where the first connecting portion 120 comes in surface contact with the first terminal 221, its electrical safety is improved, and the body portion 110 can more precisely measure the temperature of the battery pack through the first terminal 221. The first connecting portion 120 may be connected to the second terminal 221 through solder, for example.

The second connecting portion 130 is a member positioned on the other surface of the body portion 110, i.e., the opposite side to the first connecting portion 120. The extending portion 140 is a member extended from the second connecting portion 130 so as to electrically connect the second connecting portion 130 and a second terminal 222 of the battery pack.

Here, like the first connecting portion 120, the second connecting portion 130 is implemented in the shape of a flat plate. In this case, the second connecting portion 130 may be wider than the first connecting portion 120 or the body portion 110. That is, the second connecting portion 130 protrudes from the body portion 110, and accordingly, the extending portion 140 extended from the second connecting portion 130 can be spaced part from the body portion 110. Meanwhile, the second connecting portion 130 performs electrical connection between the battery pack and the body portion 110 through the extending portion.

The extending portion 140 is a member bent and extended from the second connecting portion 130. One end portion of the extending portion 140 is connected to the second connecting portion 130, and the other end portion of the extending portion 140 is connected to the second terminal 222 of the battery pack. The extending portion 140 is electrically connected to the second terminal 222 formed on the protection circuit module 220 in the battery pack, and an electrical signal generated from the second terminal 222 is transferred to the body portion 110 through the second connecting portion 130. The extending portion 140 is spaced apart from the body portion 110 as described above, and accordingly, it is possible to prevent the extending portion 140 from being shortcircuited with the body portion.

The other end portion of the extending portion 140 comes in surface contact with the second terminal 222. The extending portion 140 includes a first extending portion 141 vertically bent from the second connecting portion 130, and a second extending portion 142 horizontally bent from the first extending portion 141. In this case, the second extending portion 142 comes in contact with the second terminal 222. The second extending portion 142 has a surface which contacts a parallel surface of the second terminal 222. However, the shape of the extending portion 140 is not limited thereto, and may be bent to be rounded so that the other end portion of the extending portion comes in surface contact with the second terminal 222. The extending portion 140 may be connected to the second terminal 222 through solder, for example.

The second connecting portion 130 and the extending portion 140 may be integrally formed, or may be connected through a separate member.

As shown in Figure 3, the surface of the second extending portion 142 which contacts the second terminal 222 is coplanar with the surface of the first connecting portion 120 which contacts the first terminal. However, the first and second terminals may be at different levels, in which case the surface of the second extending portion 142 which contacts the second terminal 222 and the surface of the first connecting portion 120 which contacts the first terminal are in parallel planes.

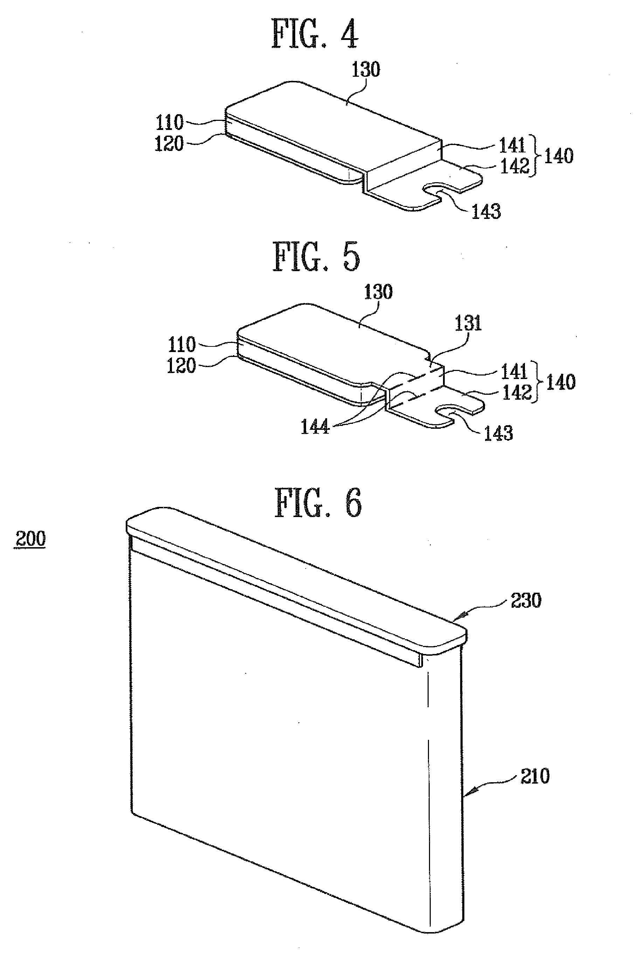

FIGS. 4 and 5 are perspective views of a protection apparatus for a battery pack according to another embodiment of the present invention. Hereinafter, the protection apparatus according to this embodiment will be described with reference to FIGS. 4 and 5.

As shown in FIG. 4, a groove portion 143 is formed in an end portion of the second extending portion 142. The groove portion includes a groove or notch at the end of the second extending portion 142.

In a case where the extending portion 140 and the second terminal 222 are connected through solder, the groove portion 143 enables the solder to be well massed so that the connection between the extending portion 140 and the second terminal 222 is firmly implemented. As shown in FIG. 4, the groove portion 143 may include any shape in which a portion of the end portion of the second extending portion 142 is cut away. For example, the groove portion 143 may include a hole passing through the end portion of the second extending portion 142.

As shown in FIG. 5, a connection region 131 of the second connecting portion 130, connected to the extending portion 140, is narrower than the region except the connection region 131 of the second connecting portion 130. When the extending portion 140 is bent from the second connecting portion 130, the width of the bent portion is decreased, so that the bending of the second connecting portion 130 can be more easily performed.

Meanwhile, bending cut-away lines 144 may be respectively formed in the regions at which the extending portion 140 is bent, e.g., at the point at which the first extending portion 141 and the second connecting portion 130 meet each other and the point at which the first and second extending portions 141 and 142 meet each other. Accordingly, the bending of the extending portion 140 can be more easily performed.

In this case, the groove portion 143 may be formed in the end portion of the second extending portion 142, or may not be formed in the end portion of the second extending portion 142.

Battery Pack Having Protection Apparatus

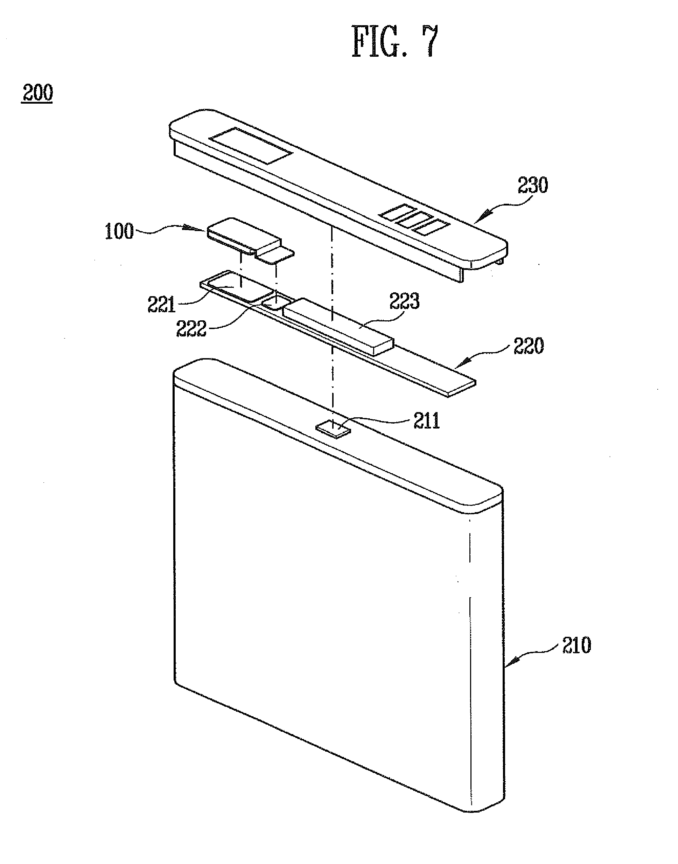

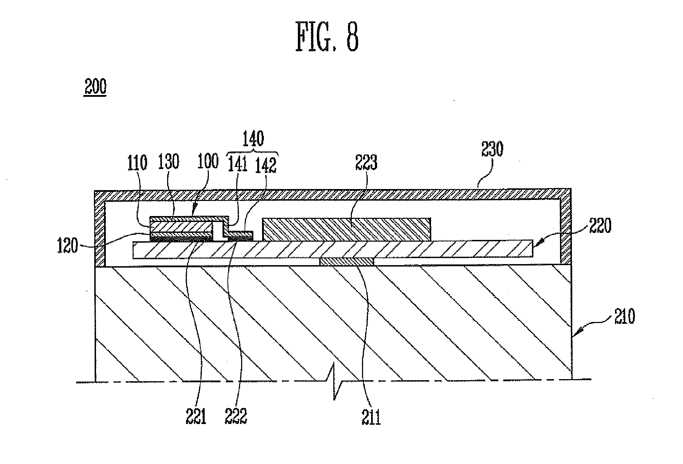

FIG. 6 is a perspective view of a battery pack 200 having a protection apparatus according to an embodiment of the present invention. FIG. 7 is an exploded perspective view of the battery pack 200 having the protection apparatus shown in FIG. 6. FIG. 8 is a sectional view of the battery pack 200 having the protection apparatus shown in FIG. 6. Hereinafter, the battery pack 200 having the protection apparatus according to this embodiment will be described with reference to FIGS. 6, 7 and 8.

Here, the protection apparatus of the battery pack 200 according to may be the protection apparatus shown in FIGS. 1 to 5.

As shown in FIGS. 6 and 7, the battery pack having the protection apparatus 100 according to this embodiment includes a bare cell 210, a protection circuit module 220 positioned on the bare cell 210, and the protection apparatus positioned on the protection circuit module 220.

The bare cell 210 is a member that generates electrochemical energy through the movement of ions or electrons.

Here, the bare cell 210 is manufactured by accommodating an electrode assembly and an electrolyte in a battery case. Here, the electrode assembly is formed by winding or stacking a positive electrode plate, a negative electrode plate and a separator interposed between the electrode plates. The electrode assembly generates energy by an electrochemical reaction between the electrode assembly and the electrolyte, and the generated energy is supplied to the outside through an electrode tab or the like. For example, the battery case may be a pouch-type, prism-type or cylinder-type battery case.

The protection circuit module 220 is a member positioned on the bare cell 210 so as to control voltage or current in charging and discharging of the bare cell 210.

The protection circuit module 220 is implemented as a circuit board having a circuit pattern formed therein, and various electronic components 223 are mounted on one surface of the protection circuit module 220. Here, the electronic components 223 may be a field effect transistor (FET), an integrated circuit (IC), and the like. The electronic components 223 function to control the electrode assembly in the bare cell 210 or to cut off a circuit when an abnormal operation of the electrode assembly. The circuit board of the protection circuit module 220 includes a switching circuit so that the switching circuit and the electronic components can more efficiently control or protect the battery pack 200. Specifically, the protection circuit module 220 can the deterioration of explosion, overheating, leakage and charging/discharging characteristics of the battery pack 200 by blocking overcharge, overdischarge, short circuit or reverse voltage of the battery pack 200. Further, the protection circuit module 220 can remove risk factors and extend the lifetime of the battery pack by prevent the degradation of electrical performance, abnormal operation, and the like.

The protection apparatus 100 is a member positioned on the protection circuit module 220 so as to sense a temperature of the battery pack 200 and to cut off current by increasing resistance when the temperature increases.

Conventionally, the PCT element was positioned between the protection circuit module and the bare cell, i.e., on the bottom surface of the protection circuit module, and therefore, a space corresponding to the thickness of the PCT element positioned between the protection circuit module and the bare cell was required. However, in this embodiment, the protection apparatus 100 is not positioned on the bottom surface of the protection circuit module 220 but positioned on the top surface of the protection circuit module 220, so that the space between the protection circuit module 220 and the bare cell 210 is not required. That is, it can be seen that the bare cell 210 and the protection circuit module 220 are adhered closely to each other. Thus, the miniaturization of the battery pack 200 can be implemented as wide as the space. Further, since the space does not come off, the safety of the battery pack 200 can be improved.

Meanwhile, the protection apparatus 100 includes a body portion 110, a first connecting portion 120, a second connecting portion 130 and an extending portion 140. In this case, the first connecting portion 120 comes in surface contact with a first terminal 221, and the extending portion 140 extended from the second connecting portion 130 is connected to the second terminal 222 of the protection circuit module 220. Conventionally, the two terminals of the protection circuit module having the PCT element connected thereto existed on different surfaces from each other, and therefore, the PCT element was necessarily positioned on the bottom surface of the protection circuit module. However, in the protection apparatus 100 according to this embodiment, the first and second terminals 221 and 222 to which the respective first and second connecting portions 120 and 130 are connected are formed on the same plane of the protection circuit module 220, i.e., on the top surface of the protection circuit module 220. In other words, the first connecting portion 130 and an end portion of the extending portion 140 are positioned on the same plane, and accordingly, the space between the protection circuit module 220 and the bare cell 210 can be reduced as compared with the conventional space.

In this case, the first terminal 221 may be in a state in which the first terminal 221 is electrically connected adjacent to a negative electrode terminal 211 of the bare cell 210. However, the present invention is not limited to the case where first terminal 221 is formed on the protection circuit module 220, and may include, for example, a case where the first terminal 221 is the negative electrode terminal 211 of the bare cell 210. For example, the first terminal 221 may come in surface contact with the first connecting portion 120 of the protection apparatus 100 by forming a through-hole in the protection circuit module 220 and exposing the negative electrode terminal 211 through the through-hole.

Meanwhile, a top cover 230 is positioned on the top of the protection circuit module 220 having the protection apparatus 100 mounted thereon so as to protect the protection apparatus 100 of the battery pack 200 and the protection circuit module 220.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A battery pack including:
a bare cell (210);
a protection circuit module (220) positioned on the bare cell and including a first terminal (221) and a second terminal (222); and
a protection device, including:
a body portion (110); and
first and second connecting portions (120, 130) positioned on opposite surfaces of the body portion and electrically connected to the body portion;
wherein the first connecting portion (120) is configured to contact the first terminal, wherein the first terminal and the body portion are electrically connected by the first connecting portion; and
wherein the second connecting portion (130) comprises an extending portion (140) bent and extending from the second connecting portion, wherein the extending portion has a surface which contacts a parallel surface of the second terminal.

2. A battery pack according to claim 1, wherein the extending portion includes a first extending portion (141) and a second extending portion (142), wherein the second extending portion is coplanar with the first connecting portion.

3. A battery pack according to claim 1 or 2, wherein the body portion comprises a material having a resistance which increases with temperature.

4. A battery pack according to any one of the preceding claims, wherein the extending portion is spaced apart from the body portion.

5. A battery pack according to any one of the preceding claims, wherein the extending portion (140) includes a hole or notch portion (143) formed at an end thereof.

6. A battery pack according to any one of the preceding claims, wherein a connection region (131) of the second connecting portion, connected to the extending portion, is narrower than the remainder of the second connecting portion.

7. A battery pack according to any one of the preceding claims" wherein the first connecting portion (120) is soldered to the first terminal and the extending portion (140) is soldered to the second terminal.

8. A battery pack according to any one of the preceding claims, wherein 30% or more of the first connecting portion is in surface contact with the first terminal.

9. A battery pack according to any one of the preceding claims, wherein the first terminal and the second terminal are located on a top surface of the protection circuit module.

10. A battery pack according to any one of the preceding claims, wherein the first connecting portion has a surface which contacts a parallel surface of the first terminal.

11. A battery pack according to claim 10, wherein the surface of the extending portion which contacts the second terminal and the surface of the first connecting portion which contacts the first terminal are in parallel planes or are coplanar.
